# EUROPEAN PATENT APPLICATION

(11) **EP 3 831 633 A2**
(43) Date of publication of application: **09.06.2021**
(21) Application number: 20209138.5
(22) Date of filing: 23.11.2020
(51) Int. Cl.: B60K 11/08, F01P 7/10

(54) **AIR INTRODUCING MECHANISM AND VEHICLE**

(30) Priority: 05.12.2019 JP 2019220243
(71) Applicant: MAZDA MOTOR CORPORATION, Hiroshima 730-8670 (JP)
(72) Inventor: UMEHARA, Hajime, Fuchu-cho, Aki-gun,, Hiroshima 730-8670 (JP); YAMASHITA, Yoshiyuki, Fuchu-cho, Aki-gun,, Hiroshima 730-8670 (JP)
(74) Representative: Müller-Boré & Partner Patentanwälte PartG mbB

(57) **Abstract**

A traveling air introducing mechanism includes a flap having a plate shape and provided inside a frame so as to be rotatable between a position where the flap closes an opening and a position where the flap opens the opening. The flap includes a body having a plate shape, a pivot shaft portion, and a plate portion disposed at the pivot shaft portion so as to intersect a direction in which the pivot shaft portion extends. The frame is formed on its inner surface with an insertion hole into which the pivot shaft portion is rotatably inserted. The plate portion is positioned between the inner surface of the frame and the body and is sized to cover the insertion hole from the body side.

## Description

### [Technical Field]

The present invention relates to an air introducing mechanism for vehicles and the like. The present invention also relates to a vehicle.

### [Background Art]

Conventionally, vehicles such as automobiles are provided with a traveling air introducing mechanism in a front portion thereof to change a state of traveling air introduction.

A traveling air introducing mechanism disclosed in Patent Literature 1 includes a frame, plate-shaped flaps that are rotatably provided inside the frame, and a drive part that rotates between a position where the flaps are open and a position where the flaps are closed. Additionally, a cover covering a pivot shaft portion of each flap is provided to prevent a foreign material from being caught by the pivot shaft portion (i.e., prevent a foreign material from being caught in a gap between the pivot shaft and a shaft receiving hole of the frame). The cover is integrally formed with the frame.

### [Citation List]

### [Patent Literature]

[Patent Literature 1] Japanese Patent Laid-Open No. 2015-93666

### [Summary of Invention]

### [Problem to be Solved by the Invention]

In the traveling air introducing mechanism disclosed in Patent Literature 1, the cover covering the pivot shaft portion of the flap is integrally formed with the frame, which makes it difficult to ensure a large effective opening area of the frame. Consequently, it is difficult to achieve both preventing a foreign material from being caught and ensuring an effective opening area of the frame.

The present invention has been made in view of the above circumstances and aims to prevent a foreign material from being caught by a pivot shaft portion of a flap while ensuring a large effective opening area of a frame.

### [Means for Solving the Problem]

To solve the above problem, an air introducing mechanism or a traveling air introducing mechanism of the present invention includes: a frame forming an opening through which air or traveling air is introduced; and a flap having a plate shape and provided within the opening or inside the frame so as to be rotatable between a position where the flap closes the opening and a position where the flap opens the opening, wherein the flap includes a body having a plate shape, a pivot shaft portion formed on at least one end of the body, and a plate portion disposed at the pivot shaft portion so as to intersect a direction in which the pivot shaft portion extends, the frame has an inner surface with an insertion hole into which the pivot shaft portion is rotatably inserted, and the plate portion is positioned between the inner surface of the frame and the body and is sized to cover the insertion hole from the body side.

In this configuration, the flap includes the plate portion disposed at the pivot shaft portion so as to intersect the direction in which the pivot shaft portion extends. Meanwhile, the frame is formed with the insertion hole into which the pivot shaft portion is rotatably inserted. When the flap is attached inside the frame, the plate portion is situated between the inner surface of the frame and the body, which is space that has not conventionally been used (i.e., dead space). This means that the plate portion does not affect an effective opening area of the frame, making it possible to ensure a large effective opening area. Additionally, as the plate portion is sized to cover the insertion hole of the frame, the plate portion can close the entire insertion hole. Hence, this configuration not only ensures a large effective opening area of the frame but also prevents a foreign material from being caught by the pivot shaft portion of the flap.

In the above air introducing mechanism or the above traveling air introducing mechanism, it is preferable that the plate portion include a protrusion on a face of the plate portion facing the frame.

In this configuration, the presence of the protrusion between the plate portion and the frame prevents surface contact between the plate portion and the frame, making it possible to reduce friction resistance of the plate portion during rotation. This helps reduce motive power required to open and close the flap.

In the above air introducing mechanism or the above traveling air introducing mechanism, it is preferable that the body be shaped to extend radially outward from the pivot shaft portion, the protrusion be a rib extending radially outwardly away from the pivot shaft portion and in the same direction as the body, and the rib be dimensioned such that a length of the rib in a plate width direction of the body is longer than a length of the rib in a thickness direction of the body.

In this configuration, when the flap is closed, the rib closes a gap between the plate portion and the frame, preventing a foreign material from being caught. Meanwhile, when the flap is open, the rib falls together with the body of the flap to an open position, making it possible to ensure a larger opening area that is increased by the amount by which the rib is open.

In the above air introducing mechanism or the above traveling air introducing mechanism, it is preferable that a plurality of the flaps be provided inside the frame, the above air introducing mechanism or the above traveling air introducing mechanism further include: a drive part disposed within a wall portion constituting the frame, the drive part being configured to rotate and drive the pivot shaft portion of a predetermined flap out of the plurality of the flaps; and a transmission mechanism configured to transmit rotary driving force from the predetermined flap to others of the plurality of the flaps than the predetermined flap and cause the others of the plurality of the flaps to rotate in conjunction with the predetermined flap, and the plate portion be provided only to the pivot shaft portion of the predetermined flap.

In this configuration, the plate portion is provided only to the pivot shaft portion of the predetermined flap, which is rotated and driven by the drive part. This helps surely reduce situations where entry of a foreign material into the insertion hole inhibits operation of the drive part. On the other hand, the other flaps, to which the drive part is not provided, are not provided with the plate portion, and this helps ensure a large effective opening area of the frame even in the configuration having the multiple flaps.

It is preferable that the above air introducing mechanism or the above traveling air introducing mechanism further include a drive part configured to rotate and drive the pivot shaft portion of the flap, the drive part have a function of learning positioning of a predetermined open position and a predetermined closed position for the body as initial settings in a state where the pivot shaft portion is coupled to the drive part, the pivot shaft portion be provided on a periphery of the pivot shaft portion with a protrusion for use in learning positioning of the body, and the insertion hole be sized to be able to accommodate the protrusion.

In this configuration, the plate portion can close the entire insertion hole even when the insertion hole is sized to be able to accommodate the protrusion provided on the periphery of the pivot shaft portion for use in learning positioning of the body, and this allows the plate portion to prevent a foreign material from entering the insertion hole with such a large diameter.

Particularly, a vehicle includes the above air introducing mechanism or the above traveling air introducing mechanism

### [Advantageous Effect]

The air introducing mechanism or the traveling air introducing mechanism of the present invention can prevent a foreign material from being caught by the pivot shaft portion of the flap while ensuring a large effective opening area of the frame.

### [Brief Description of Drawings]

FIG. 1 is a side view of a configuration of major parts in a front portion of a vehicle having a traveling air introducing mechanism according to an embodiment of the present invention.
FIG. 2 illustrates the traveling air introducing mechanism in FIG. 1 as viewed from a front face side.
FIG. 3 illustrates the traveling air introducing mechanism in FIG. 1 as viewed from a right front side.
FIG. 4 illustrates the traveling air introducing mechanism in FIG. 1 as viewed from a right rear side.
FIG. 5 is an enlarged view of a link mechanism when the traveling air introducing mechanism in FIG. 1 is viewed from a left rear side.
FIG. 6 is an enlarged perspective view of major parts of a predetermined drive-side flap out of multiple flaps in FIG. 5 and that is directly driven by a drive part.
FIG. 7 is an enlarged perspective view of a center pillar portion of a frame in FIG. 5 and its surroundings.
FIG. 8 is an explanatory sectional view of an internal structure of the center pillar portion of the frame in FIG. 5.
FIG. 9 shows the state where the predetermined flap in FIG. 5 is closed; FIG. 9(a) shows the state where a rib is closed, as viewed from the front face side, and FIG. 9(b) shows the state where the rib is closed, as viewed in a direction in which a pivot shaft portion extends.
FIG. 10 shows the state where the rib of the predetermined flap in FIG. 5 is open, as viewed from the front face side.

### [Mode for Carrying Out the Invention]

Below a detailed description will be given of a preferred embodiment of the present invention with reference to drawings. All of the features as shown in the drawings may not necessarily be essential.

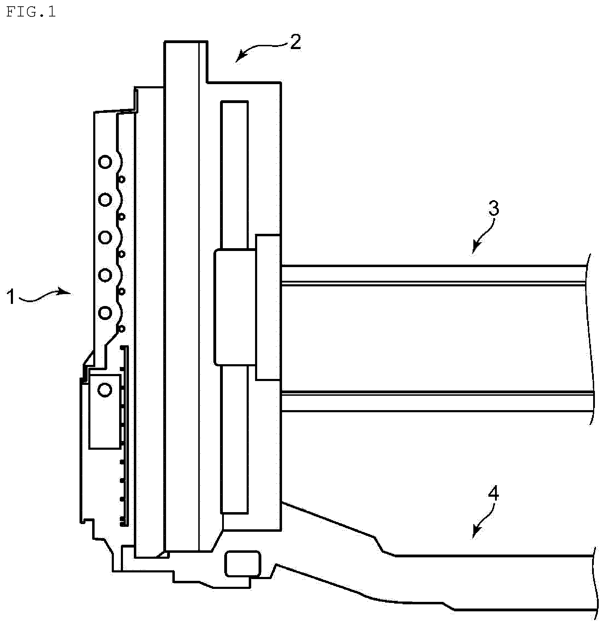

FIG. 1 illustrates a structure in which an air introducing mechanism or a traveling air introducing mechanism 1 according to an embodiment of the present invention is installed in a front portion (or at a front end of an engine compartment) of a vehicle such as an automobile. In this configuration of the front portion of the vehicle, the traveling air introducing mechanism 1 is coupled to a front portion of a radiator 2 by bolt fastening or the like. In other words, the radiator 2 is provided behind the traveling air introducing mechanism 1. The radiator 2 is fixed, by welding or the like, to front ends of side frames 3 and lower frames 4 extending in a front-rear direction of the vehicle.

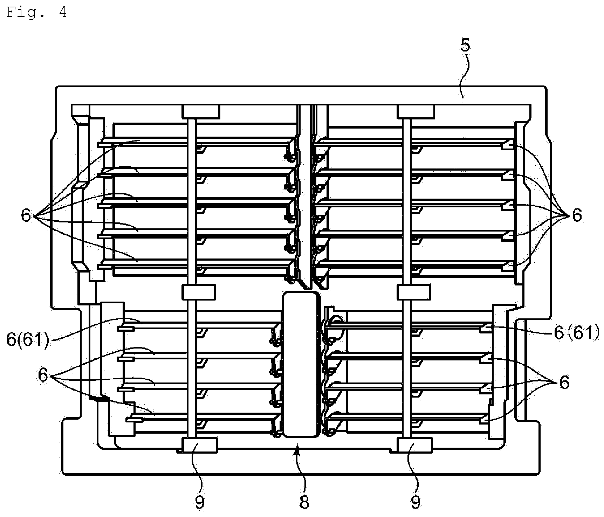

As shown in FIGS. 1 to 5, the traveling air introducing mechanism 1 of the present embodiment includes; a frame 5 that forms one or multiple openings 5a through which air or traveling air is introduced; one or multiple plate-shaped flaps 6 that are provided within the one or more openings 5a or inside the frame 5 so as to be rotatable between a position where the one or more flaps 6 close the one or more opening 5a and a position where the one or more flaps 6 open the one or more opening 5a; a drive part 7 as a mechanism to open and/or close the one or these multiple plate-shaped flaps 6; and a link mechanism 8 as a transmission mechanism. FIG. 4 illustrates one or more support bodies 9 that support the one or more flaps 6 at the open position. Here, the phrase "close the opening 5a by the multiple plate-shaped flaps 6" as used in the present invention means changing opening so as to reduce an opening area of the opening 5a and does not necessarily require fully closing the opening 5a. Also, the phrase "open the opening 5a by the multiple plate-shaped flaps 6" as used in the present invention means changing opening so as to increase an opening area of the opening 5a and does not necessarily require fully opening the opening 5a.

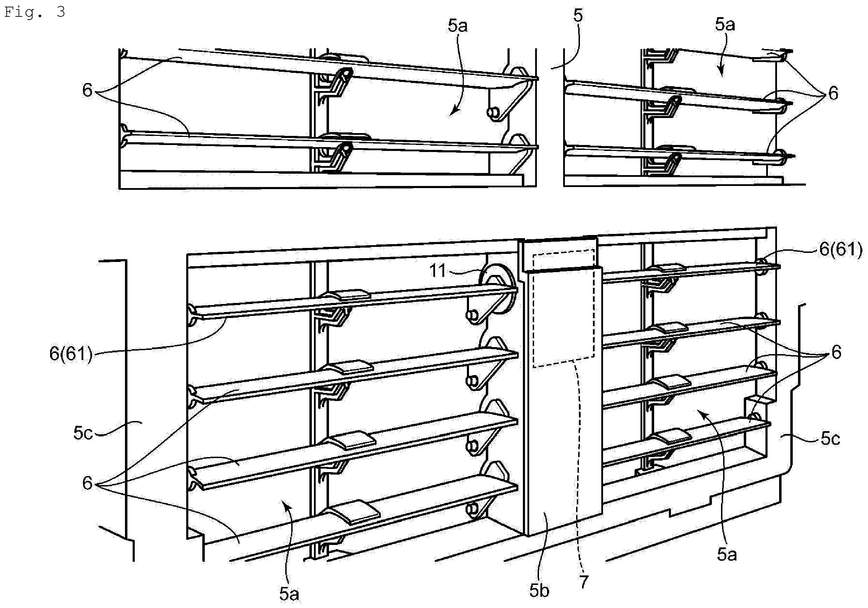

The drive part 7 includes an electric motor of any of various kinds, such as a brushless motor. The drive part 7 is accommodated inside a center pillar portion 5b (described later) of the frame 5. Also, the drive part 7 has a function of memorizing or learning positioning of a predetermined open position and a predetermined closed position for a body 6a of a predetermined flap out of the multiple flaps 6, i.e., a drive-side flap 61 (see FIG. 3), as initial settings in the state where a pivot shaft portion 12 of the drive-side flap 61 is coupled to the drive part 7.

The traveling air introducing mechanism 1 is capable of taking in a large amount of air through the openings 5a of the frame 5 by opening the flaps 6 (pivoting the flaps 6 toward the horizontal direction) when operating conditions of an engine of the automobile require a large amount of air. Meanwhile, the traveling air introducing mechanism 1 is capable of reducing resistance of the traveling air by closing the flaps 6 (pivoting the flaps 6 until they become vertical) and thus closing the openings 5a when a large amount of air is not required.

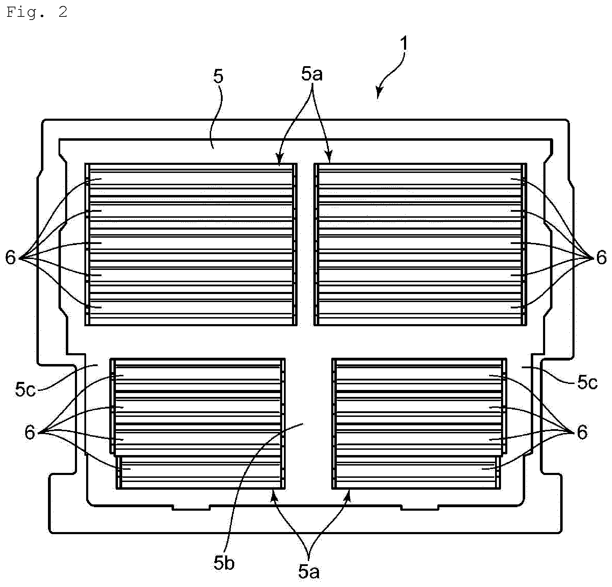

As shown in FIGS. 2 and 3, to form the multiple openings 5a, the frame 5 includes a center pillar portion 5b extending in an up-down direction, a pair of side pillar portions 5c disposed spaced apart from the center pillar portion 5b on left and right sides thereof, and multiple beams extending in the horizontal direction to connect ends of the center pillar portion 5b and the side pillar portions 5c. Each of the multiple plate-shaped flaps 6 can open and close the corresponding opening 5a of the frame 5 as the flap 6 pivots around a shaft extending in the horizontal direction (the pivot shaft portion 12 and a support shaft 6c described later) while being supported at its ends by the center pillar portion 5b and the corresponding side pillar portion 5c.

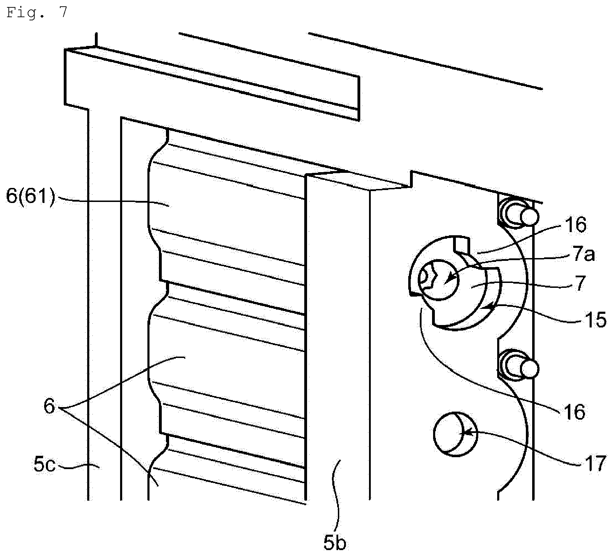

The frame 5 is formed on its inner surface (side face of the center pillar portion 5b in the present embodiment) with an insertion hole 15 and multiple support holes 17 arranged in the up-down direction as holes into which shaft portions (the pivot shaft portion 12 and a support shaft 6c described later) of the respective flaps 6 are rotatably inserted, as shown in FIG. 7. The insertion hole 15 in the center pillar portion 5b is disposed so as to communicate with an engagement recess 7a of the above-described drive part 7.

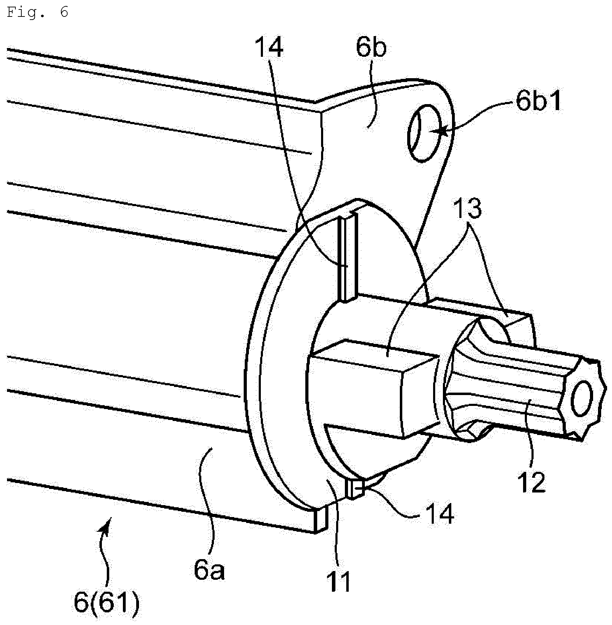

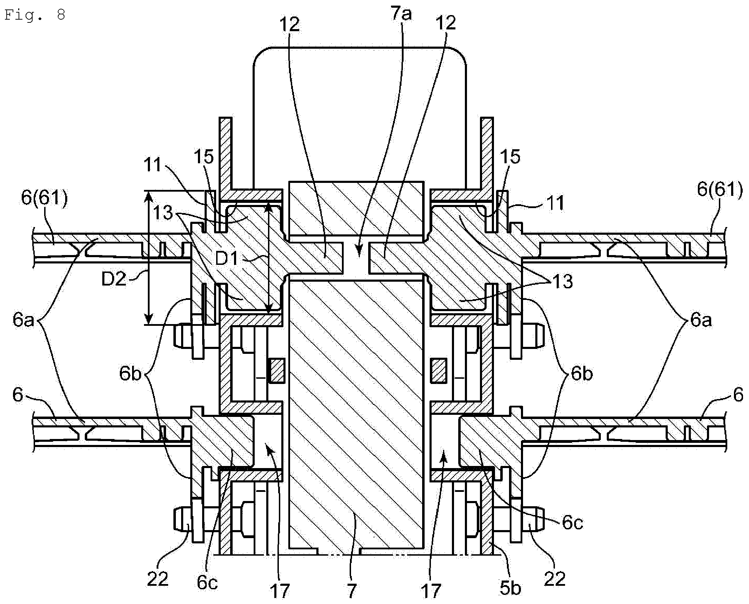

The insertion hole 15 is sized to be able to accommodate positioning protrusions 13 (described later; see FIGS. 6 and 8) of the drive-side flap 61.

The insertion hole 15 is provided therein with a pair of positioning protrusions 16 for regulating a rotary position of the positioning protrusions 13. The positioning protrusions 16 are capable of positioning the drive-side flap 61 by contacting the positioning protrusions 13 when the drive-side flap 61 is at the open position or the closed position.

The side pillar portions 5c horizontally spaced apart, particularly in a vehicle width direction, from the center pillar portion 5b of the frame 5 are also formed with support holes for supporting the shaft portions of the respective flaps 6, though not shown in the figures.

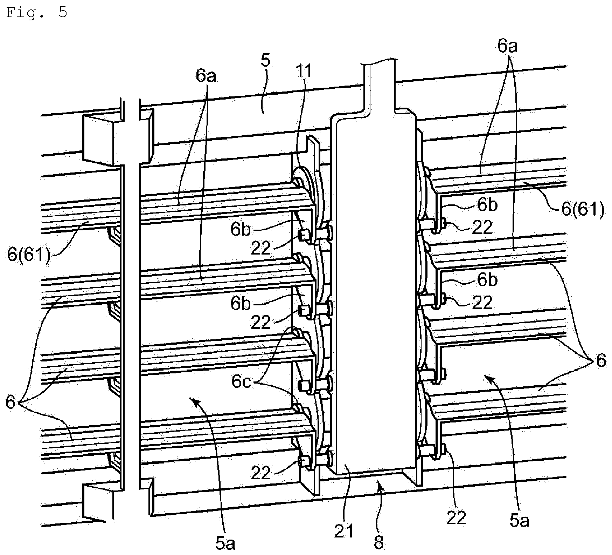

As shown in FIG. 5, the multiple plate-shaped flaps 6 have in common that they each include a body 6a having a plate shape and a link coupling portion 6b coupled with a link pin 22 (described later). Of the multiple plate-shaped flaps 6, the drive-side flap 61 connected to the drive part 7 opens and closes by directly receiving rotary driving force from the drive part 7. The other flaps 6 open and close in conjunction with the drive-side flap 61 via a link mechanism 8 (described later).

As shown in FIG. 6, the drive-side flap 61 includes a pivot shaft portion 12 formed at least on one end of the body 6a (an end closer to the drive part 7 in the present embodiment) and a plate portion 11. The body 6a extends radially outward from the pivot shaft portion 12 and also in the axial direction of the pivot shaft portion 12.

The pivot shaft portion 12 includes one or multiple projections on its periphery and is capable of engaging with the engagement recess 7a of the drive part 7 through the insertion hole 15 of the center pillar portion 5b of the frame 5 shown in FIGS. 7 and 8. The pivot shaft portion 12 is rotatable by receiving rotary driving force from the drive part 7 in the state where the pivot shaft portion 12 is engaged with the engagement recess 7a.

The pivot shaft portion 12 is provided only to the drive-side flap 61, as shown in FIGS. 6 and 8. The other flaps 6 are each provided with a support shaft 6c instead of the pivot shaft portion 12, as shown in FIGS. 5 and 8. The support shaft 6c is inserted into the corresponding support hole 17 in the center pillar portion 5b of the frame 5 and is rotatably supported by the inner face of the support hole 17.

The plate portion 11 is a disk-like portion and disposed at the pivot shaft portion 12 so as to intersect (perpendicularly intersect in the present embodiment) the direction in which the pivot shaft portion 12 extends. It should be noted that the plate portion 11 does not necessarily perpendicularly intersect the direction in which the pivot shaft portion 12 extends, and may intersect the pivot shaft portion 12 at any angle that does not impede the rotation of the plate portion 11.

The plate portion 11 is integrally formed with the body 6a such that the plate portion 11 is situated continuously with the body 6a in the direction in which the pivot shaft portion 12 extends. Thus, the presence of the plate portion 11 eliminates the need for widening a gap between the body 6a and the frame 5.

As shown in FIG. 8, a diameter D2 of the plate portion 11 is set larger than an inner diameter D1 of the insertion hole 15 in the center pillar portion 5b of the frame 5. In other words, the plate portion 11 has a size that allows the plate portion 11 to cover the insertion hole 15 from the body 6a side. When the flap 6 is attached inside the frame 5, the plate portion 11 is positioned between the inner surface of the frame 5 and the body 6a and disposed at a position to close the insertion hole 15. Here, to achieve the "size that allows the plate portion 11 to cover the insertion hole 15 from the body 6a side" as referred to in the present invention, the plate portion 11 may have a larger area than that of the insertion hole 15 when the plate portion 11 is viewed along the axial direction of the pivot shaft portion 12.

In the present invention, the plate portion 11 includes one or more ribs 14 as protrusions on its face facing the center pillar portion 5b of the frame 5, as shown in FIGS. 6, 9, and 10, to reduce a load during rotation that would come from contact between the plate portion 11 and the side face of the center pillar portion 5b of the frame 5 as the plate portion 11 rotates along with opening and closing of the flap 6.

Each rib 14 extends radially outwardly away from the pivot shaft portion 12 and in the same direction as the body 6a. In the present embodiment, the pair of ribs 14 extend from respective sides of the pivot shaft portion 12 in opposite directions radially outwardly away from each other.

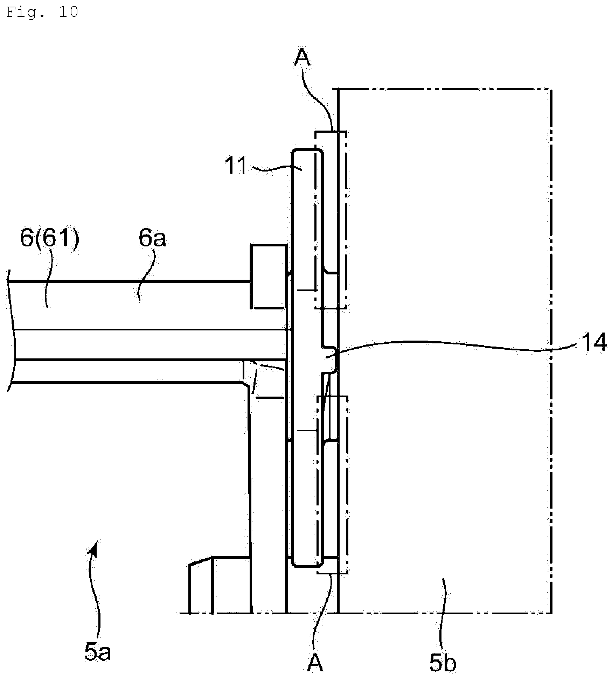

As shown in FIG. 10, the rib 14 is dimensioned such that its length in a plate width direction of the body 6a is longer than its length in a thickness direction of the body 6a.

Provided on respective side edges of the pivot shaft portion 12 shown in FIG. 6 is a pair of positioning protrusions 13 that is used for learning positioning of the body 6a of the drive-side flap 61. Inside the insertion hole 15 (see FIG. 7) of the frame 5, the pair of positioning protrusions 13 moves in a circumferential direction of the pivot shaft portion 12 as the drive-side flap 61 pivots between an open position and a closed position. The drive-side flap 61 is rotatable within a restricted range between a predetermined open position (0 degree relative to the horizontal plane) and a predetermined closed position (90 degrees) as the positioning protrusions 13 of the drive-side flap 61 abut on the respective positioning protrusions 16 (see FIG. 7) protruding inside the insertion hole 15. Thus, by manual rotation of the drive-side flap 61 from 0 to 90 degrees with the pivot shaft portion 12 of the flap 6 engaged with the engagement recess 7a (see FIG. 7) of the drive part 7, the drive part 7 can learn positioning of the drive-side flap 61 relative to the drive part 7 (i.e., initial settings for the closed position and the open position of the drive-side flap 61).

As shown in FIGS. 4, 5, and 8, the link mechanism 8 is configured to link-couple the multiple flaps 6 other than the drive-side flap 61 to the drive-side flap 61. This allows the link mechanism 8 to function as a transmission mechanism that transmits rotary driving force from the drive-side flap 61 to the other multiple flaps 6 than the drive-side flap 61 and causes these other flaps 6 to rotate in conjunction with the drive-side flap 61.

Specifically, the link mechanism 8 is composed of a link plate 21 extending in the up-down direction, particularly in the vertical direction of the vehicle, along the center pillar portion 5b of the frame 5, multiple link pins 22 protruding from respective sides of the link plate 21, and link coupling portions 6b of the respective flaps 6.

The link plate 21 is disposed on a rear face side of (or behinde) the center pillar portion 5b of the frame 5 (downstream side in a flow direction of the traveling air). The link plate 21 is disposed such that it can move in the up-down direction along the center pillar portion 5b. The link pins 22 of the number equal to the number of the flaps 6 are provided on respective side edges of the link plate 21 so as to protrude to the left and right.

The link coupling portion 6b of each flap 6 is a plate-shaped portion extending in a direction perpendicular to the pivot shaft portion 12. The link coupling portion 6b is formed at its distal end with a link hole 6b1 (see FIG. 6). Insertion of the link pins 22 into the respective link holes 6b1 results in the state where the bodies 6a of the flaps 6 other than the drive-side flap 61 are link-coupled to the body 6a of the drive-side flap 61 via the link coupling portions 6b, the link pins 22, the link plate 21, and the link coupling portion 6b of the drive-side flap 61. Hence, opening and closing of the body 6a of the drive-side flap 61 enables the bodies 6a of the other multiple flaps 6 to also open and close in conjunction therewith via the link mechanism 8.

### (Features of the present embodiment)

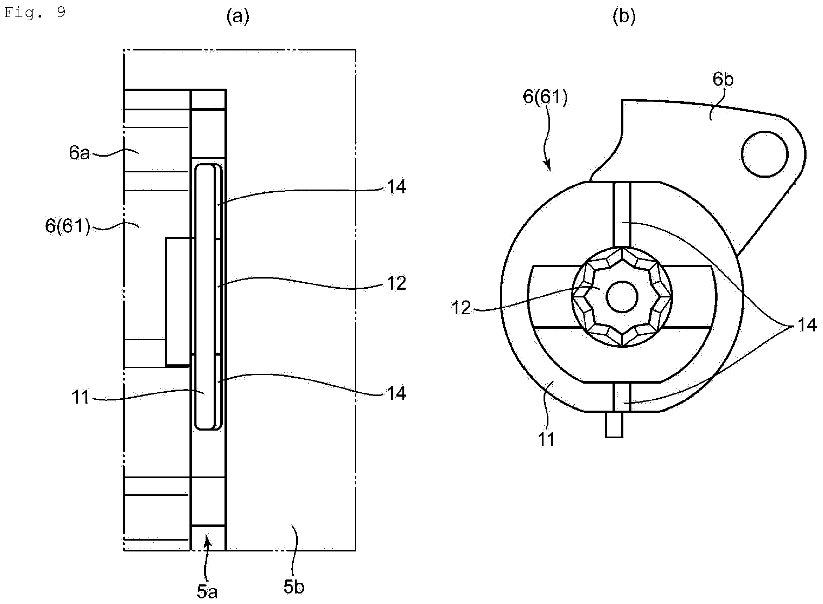

(1) As described above, the traveling air introducing mechanism 1 of the present embodiment includes the frame 5 forming the openings 5a through which traveling air is introduced and the multiple plate-shaped flaps 6 provided inside the frame 5 so as to be rotatable between the position where the flaps 6 close the opening 5a and the position where the flaps 6 open the opening 5a. The predetermined drive-side flap 61 out of the multiple flaps 6 includes the body 6a having a plate shape, the pivot shaft portion 12 formed at least one end of the body 6a, and the plate portion 11 disposed at the pivot shaft portion 12 so as to intersect (perpendicularly intersect in the present embodiment) the direction in which the pivot shaft portion 12 extends. The frame 5 is formed on its inner surface with the insertion hole 15 into which the pivot shaft portion 12 is rotatably inserted. The plate portion 11 is positioned between the inner surface of the frame 5 and the body 6a and sized to cover the insertion hole 15 from the body 6a side.
   In this configuration, the drive-side flap 61 includes the plate portion 11 disposed at the pivot shaft portion 12 so as to intersect the direction in which the pivot shaft portion 12 extends. Meanwhile, the frame 5 is formed with the insertion hole 15 into which the pivot shaft portion 12 is rotatably inserted. When the drive-side flap 61 is attached inside the frame 5, the plate portion 11 is situated between the inner surface of the frame 5 and the body 6a, which is space that has not conventionally been used (i.e., dead space). This means that the plate portion 11 does not affect an effective opening area of the frame 5, making it possible to ensure a large effective opening area. Additionally, as the plate portion 11 is sized to cover the insertion hole 15 of the frame 5, the plate portion 11 can close the entire insertion hole 15. Hence, this configuration not only ensures a large effective opening area of the frame 5 but also prevents a foreign material from being caught by the pivot shaft portion 12 of the drive-side flap 61 (i.e., prevents a foreign material from being caught in a gap between the pivot shaft portion 12 and the insertion hole 15 (or the engagement recess 7a of the drive part 7)).
(2) In the traveling air introducing mechanism 1 of the present embodiment, the plate portion 11 includes the ribs 14 as protrusions on its face facing the frame 5. In this configuration, the presence of the ribs 14 between the plate portion 11 and the frame 5 prevents surface contact between the plate portion 11 and the frame 5, making it possible to reduce friction resistance of the plate portion 11 during rotation. This helps reduce motive power required to open and close the drive-side flap 61.
(3) In the traveling air introducing mechanism 1 of the present embodiment, the body 6a is shaped to extend radially outward from the pivot shaft portion 12. The ribs 14 extending radially outwardly away from the pivot shaft portion 12 and in the same direction as the body 6a are used as protrusions. The rib 14 is dimensioned such that its length in the plate width direction of the body 6a is longer than its length in the thickness direction of the body 6a.
   In this configuration, when the drive-side flap 61 is closed as shown in FIG. 9, the body 6a and the ribs 14 are positioned so as to extend in the vertical direction, closing the opening 5a. At this time, the ribs 14 close a gap A (see FIG. 10) between the plate portion 11 and the frame 5, preventing a foreign material from being caught. Meanwhile, when the drive-side flap 61 is open as shown in FIG. 10, the ribs 14 falls to a horizontal position together with the body 6a of the drive-side flap 61 and come to the open position, making it possible to ensure a larger opening area that is increased by the amount equal to the gap A (see FIG. 10) opened by the ribs 14.
   Additionally, in the present embodiment, the length of the rib 14 in the thickness direction of the body 6a (i.e., the length of the rib 14 in the up-down direction in FIG. 10) is smaller than the thickness of the body 6a (i.e., the length of the body 10 in the up-down direction in FIG. 10). This helps ensure a still larger opening area in the gap A created by opening of the flap 6, as shown in FIG. 10.
(4) The traveling air introducing mechanism 1 of the present embodiment further includes the drive part 7 and the link mechanism 8 in the configuration in which the multiple flaps 6 are provided inside the frame 5. The drive part 7 is configured to rotate the pivot shaft portion 12 of the drive-side flap 61 out of the multiple flaps 6 and is disposed inside the wall portion (the center pillar portion 5b) constituting the frame 5. The link mechanism 8 as a transmission mechanism is configured to transmit rotary driving force of the drive-side flap 61 to the other multiple flaps 6 than the drive-side flap 61 and cause these other flaps 6 to rotate in conjunction with the drive-side flap 61. The plate portion 11 is provided only to the pivot shaft portion 12 of the drive-side flap 61.
   In this configuration, the plate portion 11 is provided only to the pivot shaft portion 12 of the drive-side flap 61, which is rotated and driven by the drive part 7. This helps surely reduce situations where entry of a foreign material into the insertion hole 15 inhibits operation of the drive part 7. On the other hand, the other flaps 6, to which the drive part 7 is not provided, are not provided with the plate portion 11, and this helps ensure a large effective opening area of the frame 5 even in the configuration having the multiple flaps 6.
   While the present embodiment depicts the link mechanism as an example of the transmission mechanism to transmit rotary driving force of the drive-side flap 61 to the other flaps 6, the present invention is not limited to this. Besides the link mechanism, the transmission mechanism may be one composed of gears or wires.
(5) In the traveling air introducing mechanism 1 of the present embodiment, the drive part 7 has a function of learning positioning of a predetermined open position and a predetermined closed position for the body 6a as initial settings in the state where the pivot shaft portion 12 of the drive-side flap 61 is coupled to the drive part 7. The pivot shaft portion 12 is provided on its periphery with the positioning protrusions 13 for use in learning positioning of the body 6a. The insertion hole 15 is sized to be able to accommodate the positioning protrusions 13.

In this configuration, the plate portion 11 can close the entire insertion hole 15 even when the insertion hole 15 is sized to be able to accommodate the positioning protrusions 13 provided on the periphery of the pivot shaft portion 12 for use in learning positioning of the body 6a, and this allows the plate portion 11 to prevent a foreign material from entering the insertion hole 15 with such a large diameter.

### (Modifications)

(A) While the above embodiment depicts the rib 14 extending in the direction away from the pivot shaft portion 12 as an example of the protrusion provided to the plate portion 11, the present invention is not limited to this. The protrusion provided to the plate portion 11 is only required to be formed at a position where the protrusion can contact the inner surface of the frame 5.
   Hence, as a modification of the present invention, the protrusion may be a rib 14 in the form of a dot-like protrusion disposed slightly outside of an outer periphery of the insertion hole 15 or may be a round rib 14 extending in the circumferential direction of the pivot shaft portion 12 at slightly outside of the outer periphery of the insertion hole 15, besides the above rib 14 extending in the direction away from the pivot shaft portion 12. In such cases too, the presence of the protrusion between the plate portion 11 and the frame 5 prevents surface contact between the plate portion 11 and the frame 5, making it possible to reduce friction resistance of the plate portion 11 during rotation and thus reduce motive power required to open and close the drive-side flap 61.
(B) While the above embodiment depicts the configuration having the multiple flaps, the present invention is not limited to this. The present invention is applicable to a configuration having a single flap.

### [Reference Signs List]

- 1: Traveling air introducing mechanism
- 5: Frame
- 5a: Opening
- 6: Flap
- 6a: Body
- 7: Drive part
- 8: Link mechanism
- 11: Plate portion
- 12: Pivot shaft portion
- 13: Positioning protrusion
- 14: Rib (protrusion)
- 15: Insertion hole
- 61: Drive-side flap (flap)

## Claims

1. An air introducing mechanism (1) comprising:
a frame (5) forming an opening (5a) through which air or traveling air is introduced; and
a flap (6, 61) having a plate shape and provided, within the opening (5a) or inside the frame (5), so as to be rotatable between a position where the flap (6, 61) closes the opening (5a) and a position where the flap (6, 61) opens the opening (5a), wherein
the flap (6, 61) includes a body (6a) having a plate shape, a pivot shaft portion (12) formed on at least one end of the body (6a), and a plate portion (11) disposed at the pivot shaft portion (12) so as to intersect a direction in which the pivot shaft portion (12) extends,
the frame (5) has an inner surface with an insertion hole (15) into which the pivot shaft portion (12) is rotatably inserted, and
the plate portion (11) is positioned between the inner surface of the frame (5) and the body (6a) and is sized to cover the insertion hole (15) from the body (6a) side.

2. The air introducing mechanism (1) according to claim 1, wherein
the plate portion (11) includes a protrusion (14) on a face of the plate portion (11) facing the frame (5).

3. The air introducing mechanism (1) according to claim 2, wherein
the body (6a) is shaped to extend radially outward from the pivot shaft portion (12),
the protrusion (14) is a rib (14) extending radially outwardly away from the pivot shaft portion (12) and in the same direction as the body (6a).

4. The air introducing mechanism (1) according to claim 3, wherein
the rib (14) is dimensioned such that a length of the rib (14) in a plate width direction of the body (6a) is longer than a length of the rib (14) in a thickness direction of the body (6a).

5. The air introducing mechanism (1) according to any one of the preceding claims, wherein a plurality of the flaps (6, 61) are provided within the opening (5a) or inside the frame (5).

6. The air introducing mechanism (1) according to claim 5 further comprising:
a drive part (7) disposed within a wall portion (5b) constituting the frame (5), the drive part (7) being configured to rotate and drive the pivot shaft portion (12) of a predetermined flap (61) out of the plurality of the flaps (6, 61); and
a transmission mechanism (8) configured to transmit rotary driving force from the predetermined flap (61) to others of the plurality of the flaps (6, 61) than the predetermined flap (61) and cause the others of the plurality of the flaps (6, 61) to rotate in conjunction with the predetermined flap (61).

7. The air introducing mechanism (1) according to claim 6, wherein
the plate portion (11) is provided only to the pivot shaft portion (12) of the predetermined flap (61).

8. The air introducing mechanism (1) according to any one of the preceding claims, further comprising a drive part (7) configured to rotate and drive the pivot shaft portion (12) of the flap (6, 61).

9. The air introducing mechanism (1) according to any one of claims 6 to 8, wherein
the drive part (7) has a function of learning positioning of a predetermined open position and a predetermined closed position for the body (6a) as initial settings in a state where the pivot shaft portion (12) is coupled to the drive part (7).

10. The air introducing mechanism (1) according to any one of the preceding claims, wherein
the pivot shaft portion (12) is provided on a periphery of the pivot shaft portion (12) with a protrusion (13) for use in learning positioning of the body (6a).

11. The air introducing mechanism (1) according to claim 10, wherein
the insertion hole (15) is sized to be able to accommodate the protrusion (13).

12. The air introducing mechanism (1) according to any one of the preceding claims, wherein
the insertion hole (15) is provided with a positioning protrusion (16) configured to abut the protrusion (13) or regulate a rotary position of the protrusion (13).

13. A vehicle comprising the air introducing mechanism (1) according to any one of the preceding claims.

14. The vehicle according to claim 13, wherein the air introducing mechanism (1) is provided in a front part or at a front end of an engine compartment.

15. The vehicle according to claim 13 or 14 further comprising a radiator provided behind the air introducing mechanism (1).
